# EUROPEAN PATENT APPLICATION

(11) **EP 2 141 391 A2**
(43) Date of publication of application: **06.01.2010**
(21) Application number: 09008677.8
(22) Date of filing: 02.07.2009
(51) Int. Cl.: F16H 63/24

(54) **Shift actuator assembly**

(30) Priority: 02.07.2008 JP 2008173768
(71) Applicant: AISIN AI Co., Ltd., Nishio-shi, Aichi-ken (JP)
(72) Inventor: Kayukawa, Norio, Nishio-shi Aichi-ken (JP); Kobayashi, Kazutaka, Nishio-shi Aichi-ken (JP); Ogami, Shiro, Nishio-shi Aichi-ken (JP)
(74) Representative: Marshall, John Grahame

(57) **Abstract**

A shift actuator assembly includes a plurality of actuators (10, 20, 30) each having a worm (11, 21, 31) rotated by an electric motor and a worm wheel (13, 23, 33) meshing with the worm (11, 21, 31) and rotated corresponding to a rotation of the worm (11, 21, 31) and the each worm wheel (13, 23, 33) of the each actuator (10, 20, 30) being rotated for operating each of a plurality of shift members (16, 26, 36) so as to move Independently, wherein the each worm wheel (13, 23, 33) of the each actuator (10,20, 30) is arranged so as to be coaxial and overlap each other.

## Description

### FIELD OF THE INVENTION

The present invention relates to a shift actuator assembly for operating plurality of shift members in such a way that each of the shift members actuates independently

### BACKGROUND

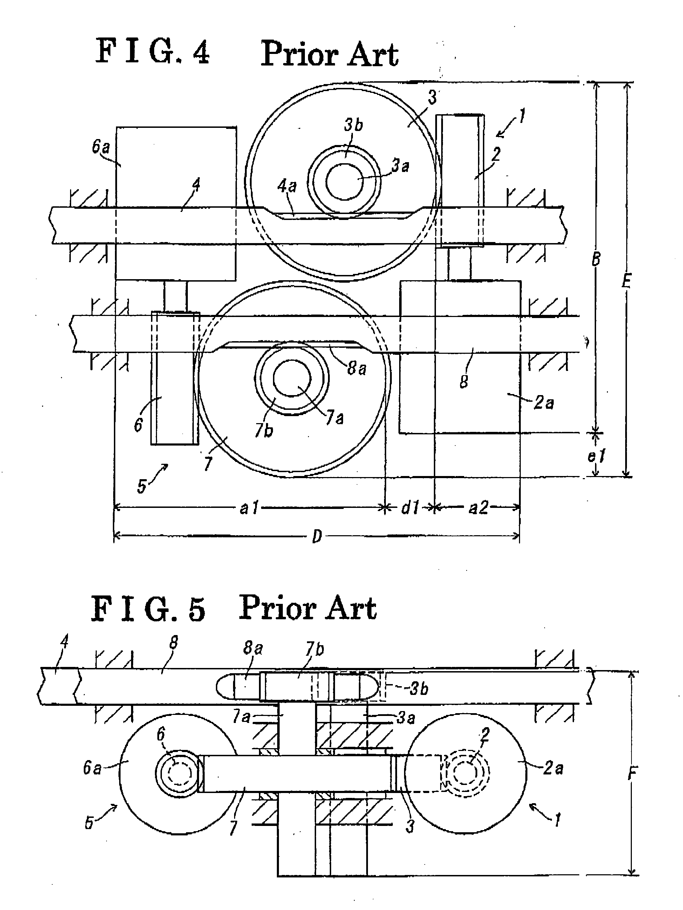

A gear type automatic transmission mounted to, for example an automobile, includes a plurality of fork shafts for shifting a speed of the vehicle by changing gears, and each fork shaft is equipped with an actuator. Illustrated in Figs. 4 and 5 are diagrams indicating an example of a known shift actuator assembly for the gear type automatic transmission. The known shift actuator assembly includes two fork shafts (4, 8), and each fork shaft (4, 8) has an actuator (1, 5) for actuating each fork shaft so as to move independently. The actuator (1, 5) includes a worm (2,6) rotated by an electric motor (2a, 6a), and a worm wheel (3, 7) is rotated corresponding to the rotation of the worm (2, 6) with reducing the rotation speed. Further, a pinion gear (3b, 7b) is rotated together with the worm wheel (3, 7) and a wheel shaft (3a, 7a), so that the fork shaft (4, 8) meshing with the pinion gear (3b, 7b) at a rack portion (4a, 3a) performs a reciprocatory movement, as a result, the gear of the transmission is changed.

According to the known shift actuator assembly, the worm wheel (3, 7), the wheel shaft (3a, 7a) and the pinion gear (3b, 7b) are positioned coaxially and overlap each other when seen in its plain view (Fig. 4). However, the worm wheel (3,7), the worm (2,6), and the electric motor (2a, 6a), which are relatively large In size, are positioned so as not to overlap each other when seen in the plain view (Fig. 4). As illustrated in the drawing of Fig. 4, the worn (2) and the electric motor (2a) are arranged so as to face the worm (6) and the electric motor (6a) (i.e., positioned alternately) when seen in its plain view in order to reduce a wasted space, however, a horizontal width D in Fig. 4 (a distance between a left end of the electric motor 6a and a right end of the electric motor 2a in a horizontal direction in the plain view) and a vertical width E in Fig. 4 (a distance between an upper end of the worm wheel 3 and a lower end of the worm wheel 7 in a vertical direction In the plain view) when seen in its plain view are relatively large. When such shift actuator assembly is mounted into the transmission casing or mounted in the vicinity of the transmission casing, because the assembly needs to be arranged in accordance with each of the fork shafts to which each shift fork for changing the gear of the transmission is provided, the assembly, which is relatively large, may be mounted to the transmission casing with difficulty.

A need thus exists for a shift actuator assembly in which a plurality of worm wheels, which are relatively large when seen in Its plain view (i.e., large in diameter) and relatively small In thickness, are arranged so as to overlap each other in order to downsize when seen in its plain view.

### SUMMARY OF THE INVENTION

According to an aspect of the present invention, a shift actuator assembly includes a plurality of actuators each having a worm rotated by an electric motor and a worm wheel meshing with the worm and rotated corresponding to a rotation of the worm and the each worm wheel of the each actuator being rotated for operating each of a plurality of shift members so as to move independently, wherein the each worm wheel of the each actuator is arranged so as to be coaxial and overlap each other.

According to another aspect of the present invention, the shift actuator assembly further includes a plurality of pinion gears and a plurality of wheel shafts, wherein the each pinion gear is connected to the each worm wheel by means of the each wheel shaft so as to be coaxially and Integrally, wherein the each shift member includes a rack shaft meshing with the each pinion gear and is operated so as to perform a reciprocatory movement, at least one of the wheel shafts is formed in a cylindrical shape, and the wheel shaft formed in the cylindrical shape, the worm wheel to which the wheel shaft formed in the cylindrical shape is provided and at least one of the other of the wheel shafts are mutually supported each other via a bearing hole formed so as to be coaxial to the wheel shaft formed in the cylindrical shape and the worm wheel to which the wheel shaft formed in the cylindrical shape is provided, so that the at least one of the other of the wheel shafts is freely rotatable relative to the wheel shaft formed in the cylindrical shape and the worm wheel to which the wheel shaft formed in the cylindrical shape is provided.

According to further aspect of the present invention, the each rack shaft includes a fork shaft to which a shift fork for changing a gear of a transmission is provided, the pinion gear provided to the wheel shaft formed in the cylindrical shape has a first diameter and is rotated in order to actuate the fork shaft for changing the gear of the transmission at a high-peed range, and the pinion gear provided to the at least one of the other of the wheel shafts being mutually supported with the wheel shaft formed in the cylindrical shape and the worm wheel to which the wheel shaft formed in the cylindrical shape is provided, via the bearing hole, has a second diameter, which is set to be smaller than the first diameter, and is rotated in order to actuate the fork shaft for changing the gear of the transmission at a low-speed range.

### BRIEF DESCRIPTION OF THE DRAWINGS

The foregoing and additional features and characteristics of the present invention will become more apparent from the following detailed description considered with the reference to the accompanying drawings, wherein:

Fig. 1 illustrates a plain view indicating an entire structure of a shift actuator assembly in a first embodiment;

Fig. 2 illustrates a front view indicating the entire structure of the shift actuator indicated in Fig. 1;

Fig. 3 illustrates a front view indicating an entire structure of a shift actuator assembly In a second embodiment;

Fig. 4 Illustrates a plain view indicating an entire structure of a known shift actuator assembly;

Fig. 5 illustrates a front view indicating the entire structure of the known shift actuator assembly illustrated in Fig, 4; and

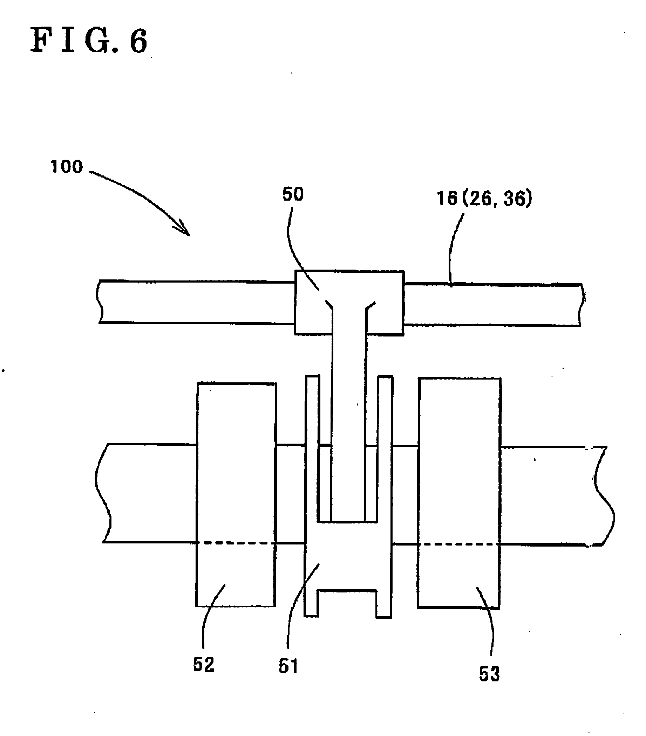

Fig. 6 illustrates a front view indicating the shift actuator assembly and a transmission.

### DETAILED DESCRIPTION

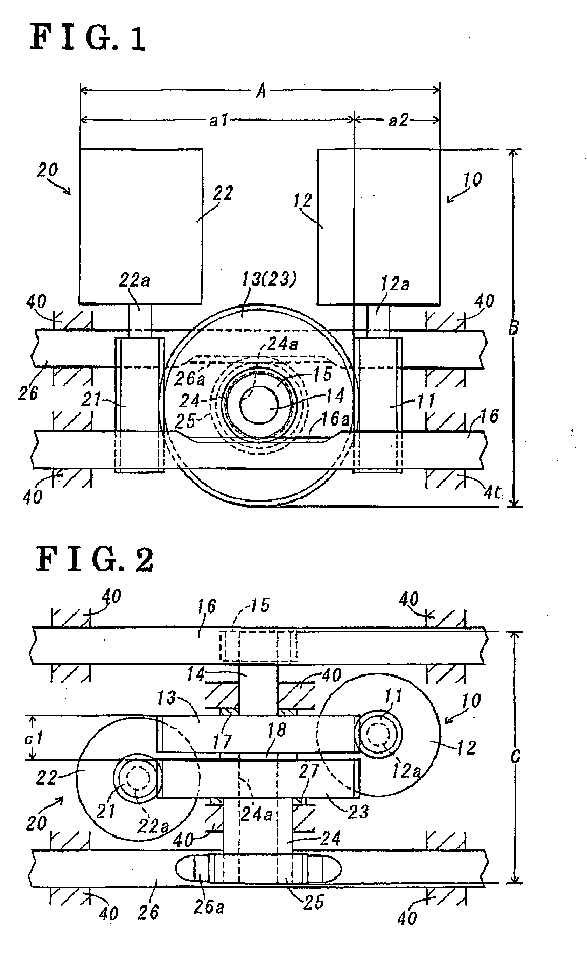

Illustrated in Figs. 1 and 2 are diagrams used for explaining a first embodiment of a shift actuator assembly related to the present invention. In the first embodiment, the shift actuator assembly includes two actuators, a first actuator 10 and a second actuator 20, for actuating fork shafts (shift members) 16 and 26 respectively. The actuator 10 includes a worm 11, a worm wheel 13, an electric motor 12 for rotating the worm 11 and a pinion gear 15 connected to the worm wheel 13 by means of the wheel shaft 14 and meshing with a rack portion 16a of a fork shaft 16. The actuator 20 includes a worm 21, a worm wheel 23, an electric motor 22 for rotating the worm 21 and a pinion gear 25 connected to the worm wheel 23 by means of the wheel shaft 24 and meshing with a rack portion 26a of the fork shaft 26. A shift fork 50 is attached to each fork shaft 16 and 26, so as to engage with a sleeve 51 of the transmission 100. In this configuration, each fork shaft 16 and 26 functions as a rack shaft for changing a gear (52, 53) of the transmission 100 by moving in a longitudinal direction thereof (a right-left direction in Figs. 1 and 2, and this movement will also be referred to as a reciprocating movement).

As indicated in the diagram of Fig. 2, a wheel shaft 14 is provided to the worm wheel 13 of the first actuator 10 so as to be coaxially and integrally with the worm wheel 13, and the wheel shaft 14 is arranged so as to extend to both of the upper and lower sides of the worm wheel 13. A wheel shaft 24 is provided to the worm wheel 23 of the second actuator 20 so as to be coaxially and Integrally with the worm wheel 23, and the wheel shaft 24 formed in a cylindrical shape is arranged so as fo extend to the lower side of the worm wheel 23. A bearing hole 24a is formed at the worm wheel 23 and the wheel shaft 24 so as to be coaxially to both of the worm wheel 23 and the wheel shaft 24, and a lower portion of the wheel shaft 14 fits into the bearing hole 24a so as to be freely rotatable and mutually supported each other. The upper portion of the wheel shaft 14 is freely rotatably supported by the a transmission casing 40 at one base portion of the wheel shaft 14 in the vicinity of an upper surface of the worm wheel 13, and the wheel shaft 24 is freely rotatably supported by the transmission casing 40 at another base portion of the wheel shaft 14 in the vicinity of a lower surface of the worm wheel 23. An intermediate spacer 18 is provided between the worm wheels 13 and 23, a spacer 17 is provided between the worm wheel 13 and the transmission casing 40, and a spacer 27 is provided between the worm wheel 23 and the transmission casing 40, and accordingly, the worm wheels 13 and 23 are regulated so as not to move in an axial direction thereof. In this configuration, the worm wheels 13 and 23 are positioned so as to be coaxially and serially overlap each other in an axial direction thereof and supported by the transmission casing 40 so as to be freely rotatable. The wheel shaft 14 may alternatively be arranged so as to extend to the lower side of the wheel shaft 24, and the transmission casing 40 supports the wheel worm wheels 13 and 23 at a lower end portion of the wheel shaft 14.

The pinion gear 15 of the first actuator 10 is fixed to a top end portion of the upwardly extending portion, at which the wheel shaft 14 is supported by the transmission casing 40. of the wheel shaft 14 so as to be coaxial thereto. The pinion gear 15 meshes with a rack portion 16a of the first fork shaft 16 being positioned so as to be spatially orthogonal to the wheel shaft 14 and supported by the transmission casing 40 so as to be freely movable in an axial direction but not to rotatably. The pinion gear 25 of the second actuator 20 is fixed to a lower end portion of the cylindrical shaped wheel shaft 24 so as to be coaxial thereto. The pinion gear 25 meshes with the rack portion 26a of the second fork shaft 26 being positioned so as to be parallel to the first fork shaft 16 and supported by the transmission casing 40 so as to be freely movable in an axial direction. In the first embodiment, the pinion gear 25 having a relatively large diameter (e.g., first diameter) and provided at the cylindrical shaped wheel shaft 24 actuates the fork shaft 26 in order to change the gear of the transmission at the high-speed range. The pinion gear 15 having a relatively small diameter (e.g., second diameter) and provided at the wheel shaft 14 supported by the bearing hole 24a of the wheel shaft 24 actuates the fork shaft 16 in order to change the gear of the transmission at the low-speed range.

Each of the electric motors 12 and 22 of the actuators 10 and 20 is provided at the transmission casing 40 in a same direction in a manner where each longitudinal direction is orthogonal to the wheel shafts 14 and 24 and the fork shafts 16 and 26 when seen in its plain view. The worm 11 provided at the top end portion of the output shaft 12a of the electric motor 12 so as to be coaxially meshes with a gear tooth formed on an outer peripheral surface of the worm wheel 13, and the worm 21 provided at the top end portion of the output shaft 22a of the electric motor 22 so as to be coaxially is meshing with a gear tooth formed on an outer peripheral surface of the worm wheel 23.

The operation of the shift actuator assembly in the first embodiment will be explained in detail. When each fork shaft 16 and 26 is in a neutral state as illustrated in the diagram of Fig. 1, each sleeve 51 of the transmission is set to a neutral position by means of the shift fork 50 of each fork shaft 16 and 26, so that any speed stage of the transmission is not established, When only the electric motor 12 of the first actuator 10 rotates in one direction, the worm 11 is rotated in the same direction, the worm wheel 13 meshing with the worm 11 is rotated corresponding to the rotation of the worm 11, and the wheel shaft 14 and the pinion gear 15 connecting to the worm wheel 13 are also rotated corresponding to the rotation of the worm wheel 13. Further, the fork shaft 16 meshing at the rack portion 16a thereof with the pinion gear 15 is moved in one axial direction, and accordingly, the shift fork 50 provided at the fork shaft 16 moves the sleeve 51 in the direction corresponding to the fork shaft 16 in order te change the corresponding gear, as a result, a corresponding shift stage is established. When the electric motor 12 is returned to the neutral position, the transmission is also returned to the neutral position. When the electric motor 12 is rotated in the other direction, a corresponding shift stage is established in the similar manner to the above-mentioned operation. The electric motor 22 of the second actuator 20 is rotated in one direction after the electric motor 12 a returned to the neutral position, a corresponding shift state is established in the similar manner to the above-mentioned operation. Furthermore, the electric motor 22 of the second actuator 20 is rotated in the other direction after the electric motor 22 is returned to the neutral position, a corresponding shift stage is established in the similar manner to the above-mentioned operation

According to the first embodiment, a dimension of the shift actuator assembly including the first and second actuators 10 and 20 is set in such a way that a horizontal width when seen in the plain view is set to "A" (a1+a2) indicated in the diagram of Fig. 1, a vertical width when seen in the plain view is set to "B" indicated in the diagram of Fig. 1, and a vertical width when seen in the front view is set to "C" indicated in the diagram Fig. 2. Comparing to the dimension of the known shift actuator assembly (hereinafter referred also to as the known assembly) Illustrated in the diagrams of Figs. 4 and 5, where a horizontal width when seen in the plain view is set to "D" (a1+a2+d1) indicated in the diagram of Fig. 4, a vertical width when seen In the plain view is set to "E" indicated in the diagram of Fig. 4, and a vertical width when seen in the front view is set to "F" indicated in the diagram Fig. 5, the horizontal width A of the first embodiment is shorter by d1 (indicated in Fig. 4) than that of the known assembly, the vertical width B of the first embodiment is shorter by e1 (indicated in Fig. 4) than that of the known assembly, and the vertical width C of the first embodiment is larger by c1 (indicated in Fig. 2) than that of the known assembly. According to the first embodiment, because the worm wheels 13 and 23 are positioned so as to overlap each other in the plain view of Fig. 1 seen in an axial direction of the wheel shaft 14, the space for the shift actuator assembly may be reduced when seen in its plain view. Further, although the space for the shift actuator assembly in its front view is further increased than that of the known assembly, because the thicknesses of the worm wheels 13 and 23 are relatively small, the increment in its front veiw may preferably be limited to a small amount.

According to the first embodiment, the shift actuator assembly is mounted in the transmission casing 40 within which ribs, bosses and the like are formed on many places inside of the transmission casing 40. When mounting the known assembly having the relatively large horizontal width when seen in its plain view (D) and the relatively large vertical width in the plain view (E) into the transmission casing 40, the assembly may interfere with the ribs and bosses and the like of the transmission casing 40 so that a level of mountability may be decreased. However, although the vertical width of the assembly of the first embodiment in its front view is increased, as long as the increment is limited to some extent, it may not seriously effect on its mountability. According to the shift actuator assembly of the first embodiment, because the dimension is set in such a way that both of the horizontal and vertical widths (A, B) in its plain view are reduced, the level of the mountability to the transmission casing 40 may be increased when compared to the known assembly.

Further, according to the first embodiment, the two worm wheels 13 and 23 are positioned so as to be coaxial and overlap each other, and the wheel shaft of one of the worm wheels (i.e., the wheel shaft 24 of the worm wheel 23) is formed in a cylindrical shape, and the wheel shaft of the other of the worm wheels (e.g., the wheel shaft 14 of the worm wheel 13) is freely rotatably supported by the bearing hole 24a formed so as to be coaxial to the wheel shaft 24 and the worm wheel 23 to which the wheel shaft 24 is provided. Accordingly, the number of supporting portions at which the worm wheels 13 and 23 are supported by the transmission casing 40 may be reduced. Accordingly, because the structure of the assembly may be simplified, and the increment in thickness of the shift actuator assembly (the increment of the vertical width when seen in the front view) may be reduced, as a result, the mountability of the shift actuator assembly to the transmission casing 40 may be improved. The configuration of the shift actuator assembly may not be limited to this structure described in the embodiment and may be modified. For example, the worm wheel 13 may include the wheel shaft 14 formed so as to extend from one side of the worm wheel 13, and the worm wheel 23 may include the wheel shaft 24 formed so as to extend from one side of the worm wheel 23. In such configuration, the horizontal width A and the vertical width B of the shift actuator assembly when seen in its plain view are relatively small, as a result, the mountability of the shift actuator assembly to the transmission casing 40 may be improved.

Furthermore, according to the first embodiment, the pinion gear 5 having a relatively large diameter and provided at the cylindrical shaped wheel shaft 24 having a relatively large diameter actuates the fork shaft 26 in order to change the gear of the transmission at the high-speed range, and the pinlon gear 15 having a relatively small diameter and provided at the wheel shaft 14 having a relatively small diameter and supported by the bearing hole 24a of the wheel shaft 24 actuates the fork shaft 16 in order to change the gear of the transmission at the low-speed range. In this configuration, a relatively large driving force may be transmitted to the fork shaft 16 for changing the gear of the transmission at the low-speed range requiring a relatively large operation force. On the other hand, a relatively small driving force may be transmitted to the fork shaft 26 for changing the gear of the transmission at the high-speed range requiring a relatively small operation force, Accordingly, the shift actuator assembly may transmit the force effectively and with ease. Furthermore, because the pinion gear 25 whose diameter is relatively large is provided at the cylindrical shaped wheel shaft 24 whose diameter is relatively large, and the pinion gear 15 whose diameter is relatively small is provided at the wheel shaft 14, a reasonable structure in which unnecessary force is not required may be obtained. The structure may not be limited to the embodiment and may be modified. For example, the pinion gears 15 and 25 provided at the wheel shaft 14 and 24 may be formed identically, and in such configuration, the mountability of the shift actuator assembly to the transmission casing 40 may also be improved.

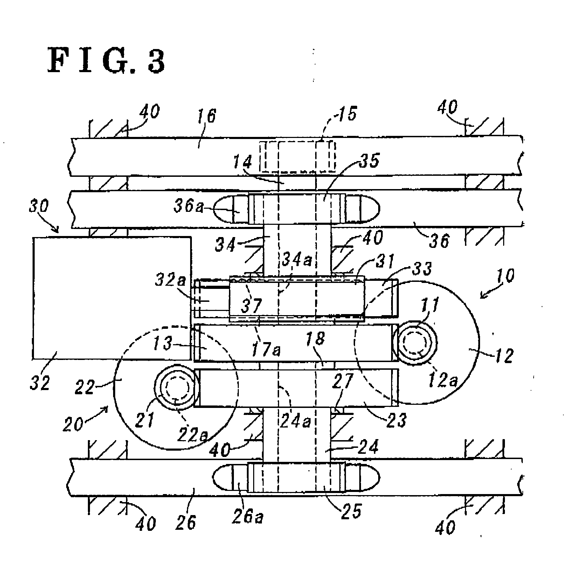

A second embodiment of the shift actuator assembly related to the present invention will be explained with reference to the drawing in Fig. 3. The shift actuator assembly of the second embodiment includes three actuators 10, 20 and 30, the actuator 10 actuating the fork shaft 16 (e.g., shift member, rack shaft), the actuator 20 actuating the fork shaft 26 (e.g., shift member, rack shaft) and the actuator 30 actuating the fork shaft 36(e.g., shift member, rack shaft). In the same way as the first embodiment, the actuator 10 includes a worn 11, a worm wheel 13, an electric motor 12 for rotating the worm 11 and a pinion gear 15 connected to the worm wheel 13 and meshing with a rack portion 16a of a fork shaft 16. The actuator 20 includes a worm 21, a worm wheel 23, an electric motor 22 for rotating the worm 21 and a pinion gear 25 connected to the worm wheel 23 and meshing with a rack portion 26a of a work shaft 26. The actuator 30 includes a worm 31, a worm wheel 33, an electric motor 32 for rotating the worm 31 and a pinion gear 35 connected to the worm wheel 33 and meshing with a rack portion 36a of a fork shaft 36.

As illustrated in the drawing of Fig. 3, the worm wheels 13, 23 and 33 are positioned so as to overlap each other and are supported by the transmission casings 40 so a to be freely rotatable. In the same manner as the first embodiment, a wheel shaft 14 is provided to the worm wheel 13 of the first actuator 10 so as to be coaxially and integrally with the worm wheel 13, and the wheel shaft 14 is arranged so as to extend to both the upper and lower side of the worm wheel 13. Awheel shaft 24 is provided to the worm wheel 23 of the second actuator 20 so as to be coaxially and integrally with the worm wheel 23, and the wheel shaft 24 formed in a cylindrical shape is arranged so as to extend to the lower side of the worm wheel 23, and a bearing hole 24a is formed at the worm wheel 23 and the wheel shaft 24. A wheel shaft 34 is provided to the worm wheel 33 of the third actuator 30 so as to be coaxially and integrally with the worm wheel 33, and the wheel shaft 34 formed In a cylindrical shape is arranged so as to extend to the upper side of the worm wheel 33 and a bearing hole 34a is formed at the worm wheel 33 and the wheel shaft 34.

A lower portion of the wheel shaft 14 downwardly extending from the worm wheel 13 is engaged with the bearing hole 24a so that the wheel shaft 14 is supported by the worm wheel 23 and the wheel shaft 24 so as to be freely rotatable and mutually supported each other, and an upper portion of the wheel shaft 14 upwardly extending from the worm wheel 13 is engaged with the bearing hole 34a so that the wheel shaft 14 is supported by the worm wheel 33 and the wheel shaft 34 so as to be freely rotatable and mutually supported each other. The upper end of the wheel shaft 14 is arranged so as to extend upwardly from the cylindrical shaped wheel shaft 34. The worm wheels 13, 23 and 33 and the wheel shafts 14, 24 and 34 are supported by the transmission casing 40 in such a way that a base portion of each wheel shaft 24 and 34, which is formed so as to be hollowed, is freely rotatably fit to the transmission casing 40. Furthermore, an Intermediate spacer 17a is provided between the worm wheels 13 and 33, an intermediate spacer 18 is provided between the worm wheels 13 and 23, a spacer 27 is provided between the transmission casing 40 and the worm wheel 23, and a spacer 37 is provided between the transmission casing 40 and the worm wheel 33. In this configuration, the worm weels 13, 23 and 33 are regulated so as not to move in an axial direction thereof.

The pinion gear 15 is coaxially fixed to the upper end portion of the wheel shaft 14, the pinion gear 25 is coaxially fixed to the lower end portion of the wheel shaft 24 and the pinion gear 35 is coaxially fixed to the upper end portion of the wheel shaft 34. The pition gear 15 meshes with the rack portion 16a of the first fork shaft 16 being positioned so as to be spatially orthogonal to the wheel shaft 14 and supported by the transmission casing 40 so as to be freely movable in an axial direction but not to be rotatably movable, the pinion gear 25 meshes with the rack portion 26a of the second fork shaft 26 being positioned so as to be spatially orthogonal to the wheel shaft 14 and supported by the transmission casing 40 so as to be freely movable in an axial direction but not to be rotatably movable, and the pinion gear 35 meshes with the rack portion 36a of the third fork shaft 36 being positioned so as to be spatially orthogonal to the wheel shaft 14 and supported by the transmission casing 40 so as to be freely movable in an axial direction but not to be rotatably movable. In the second embodiment, the pinon gears 25 having a relatively large diameter (e.g., first diameter) and provided at the cylindrical shaped wheel shaft 24 actuate the fork shaft 26 in order to change the high-speed gear of the transmission. The pinion gears 35 having a relatively large diameter (e.g., first diameter) and provided at the cylindrical shaped wheel shaft 34 actuate the fork shaft 36 in order to change the high-speed gear of the transmission. The pinion gear 15 having a relatively small diameter (e.g., second diameter) and provided at the wheel shaft 14 supported by the bearing hole 24a of the wheel shaft 24 actuates the fork shaft 16 in order to change the low-speed gear of the transmission.

Each of the electric motors 12 and 22 of the first and second actuators 10 and 20 is provided at the transmission casing 40 in a same direction in a manner where each longitudinal direction is orthogonal to the wheel shafts 14, 24 and 34 and the fork shafts 16, 26 and 36, spatially, Further, the electric motor 32 of the third actuator 30 is provided at the transmission casing 40 in a manner where its longitudinal direction is parallel to the fork shafts 16, 26 and 36, spatially. The worm 11 is provided at the top end portion of the output shaft 12a the electric motor 12 so as to be coaxially meshing with a gear tooth formed on an outer peripheral surface of the worm wheel 13, the worm 21 is provided at the top end portion of the output shaft 22a of the electric motor 22 so as to be coaxially meshing with a gear tooth formed on an outer peripheral surface of the worm wheel 23, and the worm 31 is provided at the top end portion of the output shaft 32a of the electric motor 32 so as to be cuaxially meshing with a gear tooth formed on an outer peripheral surface of the worm wheel 33.

In the same manner as the first embodiment, the shift actuator assembly of the second embodiment, when each electric motor 12, 22 and 32 of each electric motor 10, 20 and 30 is actuated, the shift fork 50 provided at the fork shaft moves the sleeve 51 in the direction corresponding to the fork shaft in order to change the corresponding gear, at a result, a corresponding shift stage is established.

According to the second embodiment, because the worm wheels 13, 23 and 33 are positioned so as to overlap each other, the space for the shift actuator assembly may be further reduced In its plain view when compared to the shift actuator assembly in the first embodiment, and mountability of the shift actuator assembly of the second embodiment to the transmission casing 40 may be further increased than that in the first embodiment.

According to the second embodiment, one end of the wheel shaft 14 of the first actuator 10 fits in the bearing hole 24a of the worm wheel 23 and the wheel shaft 24 of the second actuator, and the other end of the wheel shaft 14 of the first actuator 10 fits in the bearing hole 34a of the worm wheel 33 and the wheel shaft 34 of the third actuator 30. The structure of the shift actuator assembly may be modified in such a way that the wheel shaft 14 fits in the bearing hole 24a of the worm wheel 23 and the wheel shaft 24, and the wheel shaft 24 fits in the bearing hole 34a of the worm wheel 33 and the wheel shaft 34.

Two actuators 10 and 20 are used in the first embodiment, and three actuators 10, 20 and 30 are used in the second embodiment, however, four or more actuators may be used for the shift actuator assembly.

The configurations and structures related to the present invention described in each embodiment may be applied for the shift actuator assembly having plural actuators for operating plural fork shafts to which a shift fork for changing a gear for transmission in order tc change the speed. However, the configurations and structures may also be applied to any kind of shift actuator assembly. For example, the configurations and structure related to the present invention will be applied to a shift actuator including plural actuators for operating each clutch of a dual clutch for a gear type automatic transmission.

According to the embodiments, a shift actuator assembly includes plurality of actuators each having a worm rotated by an electric motor and a worm wheel meshing with the worm and rotated corresponding to a rotation of the worm and the each worm whee of the each actuator being rotated for operating each of a plurality of fork shafts so as to move independently, wherein the each worm wheel of the each actuator is arranged so as to be coaxial and overlap each other.

According to the embodiments, the shift actuator assembly further includes a plurality of pinion gears and a plurality of wheel shafts, wherein the each pinion gear is connected to the each worm wheel by means of the each wheel shaft so as to be coaxially and integrally, wherein the each fork shaft includes a rack shaft meshing with the each pinion gear and is operated so as to perform a reciprocatory movement, at least one of the wheel shafts is formed In a cylindrical shape, and the Wheel shaft formed in the cylindrical shape, the worm wheel to which the wheel shaft formed in the cylindrical shape is provided and at least one of the other of the wheel shafts are mutually supported each other via a bearing hole formed so as to be coaxial to the wheel shaft formed in the cylindrical shape and the worm wheel to which the wheel shaft formed in the cylindrical shape is provided, so that the at least one of the other of the wheel shafts is freely rotatable relative to the wheel shaft formed in the cylindrical shape and the worm wheel to which the wheel shaft formed in the cylindrical shape is provided.

According to the embodiments, a shift fork for changing a gear of a transmission is provided to the fork shaft, the pinion gear provided to the wheel shaft formed in the cylindrical shape has a first diameter and is rotated in order to actuate the fork shaft for changing the gear of the transmission at a high-speed range, and the pinion gear provided to the at least one of the other of the wheel shafts being mutually supported with the wheel shaft formed in the cylindrical shape and the worm wheel to which the wheel shaft formed in the cylindrical shape is provided, via the bearing hole, has a second diameter, which is set to be smaller than the first diameter, and is rotated in order to actuate the fork shaft for changing the gear of the transmission at a low-speed range.

Thus, the shift actuator assembly in which a plurality of worm wheels, which are relatively large when seen in its plain view (i.e., large in diameter) and relatively small in thickness, are arranged so as to overlap each other in order to downsize when seen in its plain view. As a result, the mountability of the shift actuator assembly to the transmission casing may be improved.

Thus, the number of supporting portions at which the worm wheels and are supported by the transmission casing may be reduced. Accordingly, because the structure of the assembly may be simplified, and the increment in thickness of the shift actuator assembly (the increment of the vertical width when seen in the front view) may be reduced, as a result, the mountability of the shift actuator assembly to the transmission casing may be improved

In this configuration, a relatively large driving force may be transmitted to the fork shaft for changing the gear of the transmission at the low-speed range requiring a relatively large operation force. On the other hand, a relatively small driving force may be transmitted to the fork shaft for changing the gear of the transmission at the high-speed range requiring a relatively small operation force. Accordingly, the shift actuator assembly may transmit the force effectively and with ease, and reasonable structure in which unnecessary force is not required may be obtained.

## Claims

1. A shift actuator assembly comprised of:
a plurality of actuators (10, 20, 30) each including a worm (11, 21, 31) rotated by an electric motor (12, 22, 32) and a worm wheel (13, 23, 33) meshing with the worm (11, 21, 31) and rotated corresponding to a rotation of the worm (11, 21, 31); and
the each worm wheel (13, 23, 33) of the each actuator (10, 20, 30) being rotated for operating each of a plurality of shift members (16, 26, 36) so as to move independently, wherein the each worm wheel (13, 23, 33) of the each actuator (10, 20, 30) is arranged so as to be coaxial and overlap each other.

2. The shift actuator assembly according to Claim 1 further including a pluraity of pinion gears (15, 25, 35) and a plurality of wheel shafts (14, 24, 34), wherein the each pinion gear (15, 25, 35) is connected to the each worm wheel (13, 23, 33) by means of the each wheel shaft (14, 24, 34) so as to be coaxially and integrally, wherein the each shift member (13, 26, 36) includes a rack shaft meshing with the each pinion gear (15, 25, 35) and is operated so as to perform a reciprocatary movement, at least one of the wheel shafts (24, 34) is formed in a cylindrical shape, and the wheel shaft formed in the cylindrical shape (24, 34), the worm wheel (23, 33) to which the wheel shaft formed in the cylindrical shape (24, 34) is provided and at least one of the other of the wheel shafts (14) are mutually supported each other via a bearing hole (24a, 34a) formed so as to be coaxial to the wheel shaft formed in the cylindrical shape (24, 34) and the worm wheel (23, 33) to which the wheel shaft formed in the cylindrical shape (24, 34) is provided, so that the at least one of the other of the wheel shafts (14) is freely rotatable retative to the wheel shaft formed in the cylindrical shape (24, 34) and the worm wheel (23, 33) to which the wheel shaft formed in the cylindrical shape (24, 34) is provided.

3. The shift actuator assembly according to Claim 2, wherein the each rack shaft includes a fork shaft (16, 26, 36) to which a shift fork for changing a gear of a transmission is provided, the pinion gear (25, 35) provided to the wheel shaft formed in the cylindrical shape (24, 34) has a first diameter and is rotated in order to actuate the fork shaft for changing the gear of the transmission at a high-speed range, and the pinion gear (15) provided to the at least one of the other of the wheel shafts (14) being mutually supported with the wheel shaft formed in the cylindrical shape (24, 34) and the worm wheel (23, 33) to which the wheel shaft formed in the cylindrical shape (24, 34) is provided, via the bearing hole (24a, 34a), has a second diameter, which is set to be smaller than the first diameter, and is rotated in order to actuate the fork shaft for changing the gear of the transmission at a low-speed range.
